# EUROPEAN PATENT APPLICATION

(11) **EP 3 267 051 A1**
(43) Date of publication of application: **10.01.2018**
(21) Application number: 17179438.1
(22) Date of filing: 03.07.2017
(51) Int. Cl.: F16B 21/06

(54) **EXPANSIVE FASTENER**

(30) Priority: 07.07.2016 CN 201620713284 U
(71) Applicant: Chu, Chen-Chiu, Huai`an City, Jiangsu (CN)
(72) Inventor: Chu, Chen-Chiu, Huai`an City, Jiangsu (CN)
(74) Representative: Lang, Christian

(57) **Abstract**

The present patent discloses an expansive fastener, comprising a male buckle and a female buckle, wherein the male buckle comprises a main body, round-head bumps and a front opening, the front opening being located at a front end of the body and being conical, the circular head bumps being located in front of the main body and behind the front opening, a rear end of the main body being connected to a pressing face; and, the female buckle comprises a main body, grooves, an enlarged opening, externally circular barbs and a cone, the enlarged opening being located at the rearmost end of the main body, both the grooves and the cone being located inside the main body, the externally circular barbs being sheathed outside the main body. With the round-head bumps, the detachability is excellent and it is convenient for mounting and replacement.

## Description

### FIELD OF THE INVENTION

The present patent relates to a fastener and in particular to an expansive fastener.

### BACKGROUND OF THE INVENTION

In the conventional techniques, when a backboard (for example, a fixing backboard for furniture such as a desk) is jointed to a frame, or when two components are jointed together (for example, two side plates and a laminate are jointed together), the backboard is usually nailed to the wood frame or the side plates are jointed to the laminate by nails or screws. This fixation way is inconvenient for operation, and the jointing can be realized by using a screw driver or a hammer. Moreover, as a major problem, the component appearance will be damaged since the snails or screws will be rusted, so that the overall appearance does not look beautiful. Or even, the screws cannot be disassembled. Fixed fasteners are also used for jointing in the past. However, there are some problems in use. When a fastener with barbs is used, components cannot be disassembled after being assembled. If the components are required to be detachable, the components would become loose when they are impacted (for example, kicked), so that it is inconvenient for use.

### SUMMARY OF THE INVENTION

An objective of the present patent is to provide an expansive fastener in order to solve the problems mentioned in the background art.

For this purpose, the present patent employs the following technical solutions.

An expansive fastener is provided, including a male buckle and a female buckle; the male buckle includes a main body, round-head bumps and a front opening, the front opening being located at a front end of the main body and being conical, the round-head bumps being located in front of the main body and behind the front opening, a rear end of the main body being connected to a pressing face; and, the female buckle includes a main body, grooves, an enlarged opening, externally circular barbs and a cone, the enlarged opening being located at the rearmost end of the main body, both the grooves and the cone being located inside the main body and the grooves being connected to the enlarged opening, the externally circular barbs being sheathed outside the main body, the number of the round-head bumps being consistent with that of the grooves.

As a further solution of the present utility mode, barbs are further provided on the male buckle.

As a further solution of the present utility mode, there are 3 to 6 round-head bumps and 2 to 5 externally circular barbs.

Compared with the prior art, the present patent has the following beneficial effects: this device is simple in structure, rational in design, small in size, light in weight and convenient for storage and transportation. With the round-head bumps, the detachability is excellent and it is convenient for mounting and replacement. This device does not need any screw so that the problem of screw rusting is avoided, or any mounting tool so that the operation is simple and easy. As several opposite bumps are matched in this device, close fitting is realized in the principle of expansion and falling-off is prevented. Moreover, this device is suitable for components of various thicknesses and various occasions, and thus has a broad range of application.

### BRIEF DESCRIPTION OF THE DRAWINGS

Fig. 1 is an exploded view of Embodiment 1 of an expansive fastener;
Fig. 2 is a connection diagram of Embodiment 1 of the expansive fastener;
Fig. 3 is an exploded view of Embodiment 2 of the expansive fastener; and
Fig. 4 is a connection diagram of Embodiment 2 of the expansive fastener,

### DETAILED DESCRIPTION OF THE PREFERRED EMBODIMENTS

The technical solutions of the present patent will be further described hereinafter in details by specific implementations.

### Embodiment 1

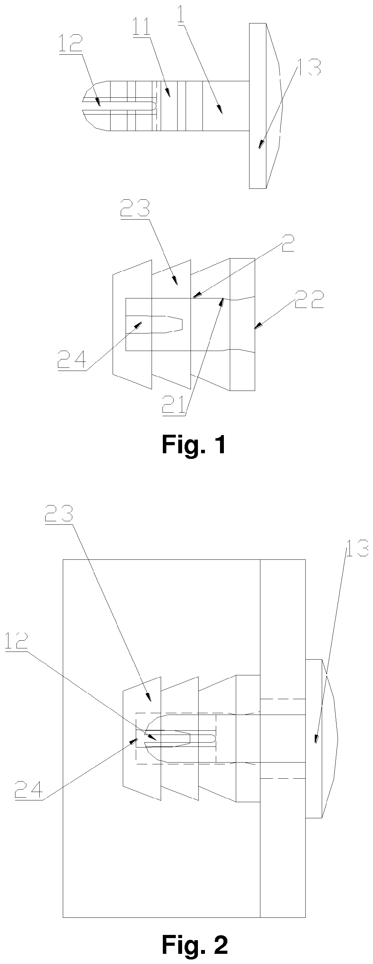

With reference to Figs. 1 - 2, an expansive fastener is provided, including a male buckle 1 and a female buckle 2. The male buckle 1 includes a main body, round-head bumps 11 and a front opening 12. The front opening 12 is located at a front end of the main body and is conical. The round-head bumps 11 are located in front of the main body and behind the front opening 12. A rear end of the main body is connected to a pressing face 13. The female buckle 2 includes a main body, grooves 21, an enlarged opening 22, externally circular barbs 23 and a cone 24. The enlarged opening 22 is located at the rearmost end of the main body. Both the grooves 21 and the cone 24 are located inside the main body, and the grooves 21 are connected to the enlarged opening 22. The externally circular barbs 23 are sheathed outside the main body. The number of the round-head bumps 11 is consistent with that of the grooves 21.As the round-head bumps 11 are fitted to the grooves 21, the fastener will not fall off after being fixed in place. The enlarged opening facilitates the insertion of the male buckle 1. The female buckle 2 is preassembled on one component to be assembled, and the male buckle 1 is inserted into the female buckle 2 through the component to be assembled. When the male buckle 1 is inserted into the first groove 21 of the female buckle 2, the front opening 12 is stressed and closed so that it is convenient for passing it through. When the male buckle 1 is inserted into the cone 24 inside the female buckle 2, the male buckle 1 will be expanded along with the cone 24 and then closely fitted with the female buckle 2. As the male buckle 1 is pressed in, the male buckle 1 advances along with the cone 24 inside the female buckle 2, so that expansive fastening is realized and falling-off can be prevented.

### Embodiment 2

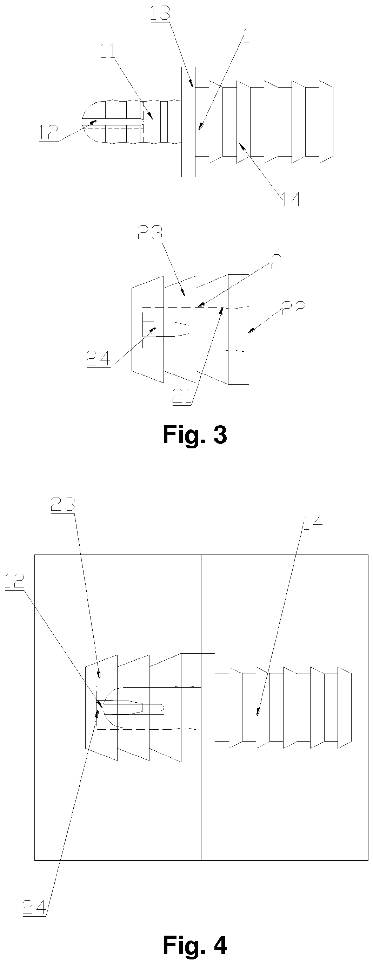

With reference to Figs. 3 - 4, barbs 14 are further provided on the male buckle 1, the barbs 14 are located behind the pressing face 13, and the remaining is the same as Embodiment 1.

The female buckle 2 is preassembled on one component to be assembled, the male buckle 1 is preassembled on another component to be assembled, and the component with the male buckle 1 is pushed toward the position of the female buckle 2. When the male buckle 1 is inserted into the first groove 21 of the female buckle 2, the front opening 12 is stressed and closed so that it is convenient for passing it through. When the male buckle 1 is inserted into the cone 24 inside the female buckle 2, the male buckle 1 will be expanded along with the cone 24 and then closely fitted with the female buckle 2. As the male buckle 1 is pressed in, the male buckle 1 advances along with the cone 24 inside the female buckle 2, so that expansive fastening is realized and falling-off can be prevented.

Although the preferred implementations of the present patent have been described in details hereinbefore, the present patent is not limited thereto. Within the range of known knowledge, a person of ordinary skill in the art may make various variations without departing from the purpose of the present patent.

## Claims

1. An expansive fastener, comprising a male buckle and a female buckle; the male buckle comprises a main body, round-head bumps and a front opening, the front opening being located at a front end of the main body and being conical, the round-head bumps being located in front of the main body and behind the front opening, a rear end of the main body being connected to a pressing face; and, the female buckle comprises a main body, grooves, an enlarged opening, externally circular barbs and a cone, the enlarged opening being located at the rearmost end of the main body, both the grooves and the cone being located inside the main body and the grooves being connected to the enlarged opening, the externally circular barbs being sheathed outside the main body, the number of the round-head bumps being consistent with that of the grooves.

2. The expansive fastener according to claim 1, wherein barbs are further provided on the male buckle.

3. The expansive fastener according to claim 1, wherein there are 3 to 6 round-head bumps and 2 to 5 externally circular barbs.

4. The expansive fastener according to claim 2, wherein there are 3 to 6 round-head bumps and 2 to 5 externally circular barbs.
